# EUROPÄISCHE PATENTSCHRIFT

(11) **EP 0 966 641 B1**
(45) Veröffentlichungstag und Bekanntmachung des Hinweises auf die Patenterteilung: **02.01.2002**
(21) Anmeldenummer: 97954728.8
(22) Anmeldetag: 09.12.1997
(51) Int. Cl.: F26B 25/22, D21H 23/78, D21H 25/06, D21F 5/06

(54) **VERFAHREN UND ANLAGE ZUM IMPRÄGNIEREN UND TROCKNEN EINER DURCHLAUFENDEN BAHN**
METHOD AND DEVICE FOR IMPREGNATING AND DRYING A CONTINUOUS WEB
PROCEDE ET INSTALLATION D'IMPREGNATION ET DE SECHAGE D'UNE BANDE CONTINUE

(30) Priorität: 14.03.1997 DE 19710549
(43) Veröffentlichungstag der Anmeldung: 29.12.1999
(73) Patentinhaber: VITS-Maschinenbau GmbH, 40764 Langenfeld (DE)
(72) Erfinder: ERKELENZ, Willi, D-40764 Langenfeld (DE); KLAS, Ernst, D-53721 Siegburg (DE); UNGER, Udo, D-42799 Leichlingen (DE)
(74) Vertreter: Frese-Göddeke, Beate, Dr.
(86) Internationale Anmeldenummer: EP9706859
(87) Internationale Veröffentlichungsnummer: WO9841805

(56) Entgegenhaltungen:
- EP-A- 0 704 485
- EP-A- 0 787 964
- CH-A- 535 074
- DE-A- 3 741 128
- US-A- 4 437 917
- CLYDE F. COOBS, JR: "Printed Circuit Handbook 3rd Edition" , MCGRAW-HILL BOOK COMPANY , HEWLETT-PACKARD COMPANY PALO ALTO , CALIFORNIA XP002067944 in der Anmeldung erwähnt siehe Seite 6.3 - Seite 6.5

## Beschreibung

Die Erfindung betrifft ein Verfahren zum Imprägnieren und Trocknen einer durchlaufenden Bahn aus saugfähigem Material, insbesondere einer Papierbahn, mit einem in Wasser gelösten Kunstharz, wie Hamstoffharz oder Melaminharz, gemäß dem Oberbegriff des Anspruchs 1. Außerdem betrifft die Erfindung eine zur Durchführung des Verfahrens geeignete Anlage gemäß dem Oberbegriff des Anspruchs 4. Ein derartiges Verfahren, beziehungsweise Anlage, ist aus der CH-A-535 074 bekannt.

Mit Kunstharz, insbesondere Harnstoff oder Melaminharz, imprägnierte Papiere werden z. B. als Dekorfolien für Spanplatten und dergleichen, insbesondere für die Möbelindustrie, verwendet Das saugfähige Rohpapier wird bei bekannten Verfahren imprägniert, indem man es durch eine wässrige Lösung des Imprägniermittels hindurchleitet und nach Abquetschen des Überschusses mittels Dosierwalzen anschließend einem Trockner zuführt. Bei der Trocknung wird auch die Aushärtungsreaktion der Harze ausgelöst Diese Reaktion darf jedoch im allgemeinen nicht zum Abschluß kommen, da bei weiteren Arbeitsgängen das Harz wieder fließfähig gemacht werden muß. Die Restfeuchte der Bahn (nach dem Trocknen) ist ein Maß für den Grad der Aushärtungsreaktion.

Nach dem Trocknen wird die Bahn abgekühlt und mit Hilfe eines Querschneiders zu Bögen geschnitten oder aufgewickelt.

Im Verlauf des Herstellungsverfahrens muß in bestimmten Zeitabständen überprüft werden, ob die vorgeschriebenen Eigenschaften, wie Restfeuchte und aufgetragene Harzmenge, eingehalten werden. Zu diesem Zweck wird bisher mit dem Querschneider ein schmaler Streifen Folie herausgeschnitten. Aus diesem Streifen werden Flächenstücke von der Größe 1dm² herausgestanzt. Diese Flächenstücke werden gewogen und in einem Trockenschrank ausgetrocknet. Das Austrocknen im Trockenschrank dauert etwa 5 bis 10 Minuten. Die Differenz zwischen dem vor der Austrocknung und dem nach der Austrocknung gemessenen Gewicht ist die Restfeuchte. Wird anhand dieser Proben festgestellt, daß beispielsweise die aufgetragene Harzmenge nicht stimmt, so wird versucht, durch eine andere Einstellung des Dosiemalzenspaltes das Gewicht zu korrigieren. Wird jedoch eine unzulässige Abweichung der Restfeuchte festgestellt, die in der Regel bei 6,5 % ± 0,1 liegen soll, so wird die Feuchte durch eine Veränderung der Bahngeschwindigkeit oder durch eine Änderung der Trocknungsleistung korrigiert.

Die beschriebene Verfahrensweise hat u. a. den Nachteil, daß die Entnahme der Probestreifen zu Materialverlusten führt. Sie ist praktisch nur durchführbar, wenn die getrocknete Bahn zu Bögen geschnitten wird. Wenn aber die getrocknete Bahn aufgewickelt wird, ist eine Probenahme kaum möglich. Ein besonderer Nachteil besteht darin, daß die Information über die Qualität des Produktes erst nach 5 bis 10 Minuten vorliegt. Bei Abweichungen von den vorgeschriebenen Werten wird in diesem Zeitraum weiter fehlerhaftes Material produziert. Oft werden Imprägnieranlagen mit verminderter Produktionsgeschwindigkeit betrieben, um eine größere Sicherheit in bezug auf die Einhaltung der vorgeschriebenen Qualitätsmerkmale zu erreichen. Um zu vermeiden, daß die aufgetragene Harzmenge die Mindestgrenze unterschreitet, wird häufig mit einem etwas zu hohen Harzgehalt gefahren.

Aus CH-PS 535 074 ist ein Verfahren zum kontinuierlichen, gleichmäßigen Auftragen von Behandlungsflotten auf ein Textilmaterial bekannt, bei dem an insgesamt drei Stellen das Flächengewicht der durchlaufenden Bahn automatisch gemessen wird, nämlich vor der Imprägnierung, zwischen Imprägnierung und Trocknung sowie nach Trocknung. Mit den ermittelten Daten wird die aufgetragene Menge an Behandfungsftotte geregelt und durch Beeinflussung der Trocknungstemperatur und der Durchlaufgeschwindigkeit die Restfeuchte konstant gehalten.

Durch PRINTED CIRCUITS HANDBOOK, Herausgeber: Clyde F. Coombs, Jr., 3. Auflage, McGraw-Hill Book Company, 6.3 bis 6.5, ist ein Verfahren zum Herstellen von sogenannten Prepregs, u. a. auf Papierbasis, bekannt, bei dem die Bahn zunächst durch ein Imprägnierwerk, bestehend aus einer mit Harz gefüllten Wanne und einem Satz Dosierwalzen, und anschließend durch einen Trockner geführt wird. Meßgeräte, die mit Betastrahlen arbeiten, vergleichen das Flächengewicht des Rohpapiers mit dem halbausgehärteten Endprodukt und korrigieren automatisch die Dosierwalzen, so daß das vorgeschriebene Verhältnis zwischen Harz und Basismaterial eingehalten wird. Der Polymerisationsgrad wird durch die Temperatur und die Geschwindigkeit der Trocknungsluft sowie durch die Durchlaufgeschwindigkeit der Papierbahn gesteuert.

Der Erfindung liegt die Aufgabe zugrunde, bei einem Verfahren gemäß dem Oberbegnff des Anspruchs 1 sowohl die aufgetragene Harzmenge als auch die Restfeuchte kontinuierlich und automatisch zu regeln. Darin eingeschlossen ist die Aufgabe, eine Anlage gemäß den Oberbegriff des Anspruchs 4 mit den für die erfindungsgemäße Regelung geeigneten Organen auszustatten.

Der erste Teil der Aufgabe wird durch die kennzeichnenden Merkmale des Anspruchs 1 gelöst, der zweite Teil durch die kennzeichnenden Merkmale des Anspruchs 4. Die abhängigen Patentansprüche betreffen vorteilhafte Ausgestaltungen der Erfindung.

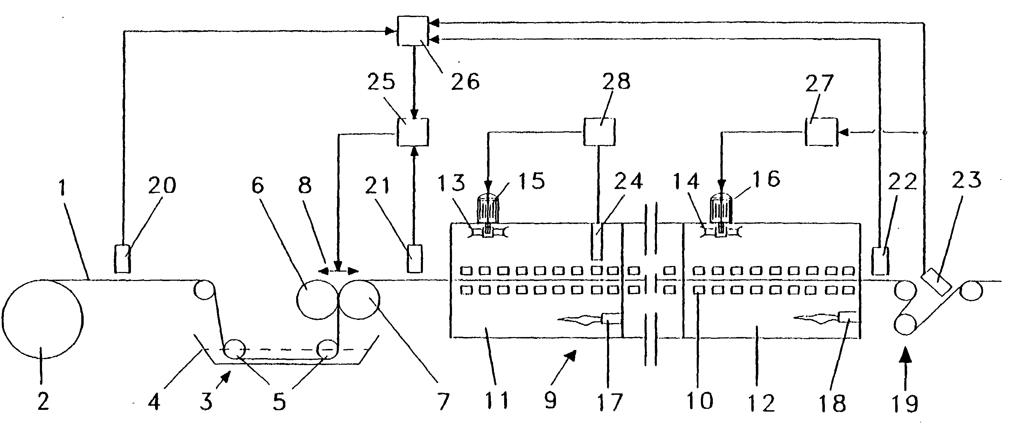

Die Zeichnung dient zur Erläuterung der Erfindung anhand eines schematisch und stark vereinfacht dargestellten Ausführungsbeispiels.

Eine zu imprägnierende Papierbahn 1 wird von einer Rolle 2, die in einem nicht dargestellten Lieferwerk gelagert ist, abgewickelt und einem Imprägnierwerk 3 zugeführt. Die Papierbahn hat ein Flächengewicht von etwa 20 bis 200 g/m², vorzusgweise von etwa 60 bis 120 g/m². Das Imprägnierwerk 3 umfasst eine mit wässriger Harzlösung gefüllte Wanne 4, durch die die Papierbahn 1 über Umlenkwalzen 5 geführt wird, und eine Dosiereinheit in Gestalt eines Quetschwalzenpaares 6, 7. Die Quetschwalze 6 ist mittels eines nicht dargestellten Stellantriebs, wie durch den Doppelpfeil 8 angedeutet, in waagerechter Richtung verstellbar, so daß die Breite des zwischen den beiden Quetschwalzen 6, 7 bestehenden Spaltes, durch den die nasse Papierbahn 1 hindurchgeführt wird, feinfühlig veränderlich ist. Von dem Imprägnierwerk 3 gelangt die Papierbahn 1 in einen Schwebetrockner 9. Dieser ist mit zahlreichen fingerartigen Luftkissendüsen 10 ausgestattet, die oberhalb und unterhalb der Papierbahn 1 reihenweise angeordnet sind und sich quer zur Papierbahn 1 erstrecken. Der Schwebetrockner 9 ist baukastenartig aus mehreren Zonen aufgebaut. In der Zeichnung sind nur zwei Zonen zu sehen, nämlich eine Einlaufzone 11 und eine Auslaufzone 12. Dazwischen können - wie angedeutet - mehrere Zwischenzonen angeordnet sein. Jede Zone ist mit mindestens einem Gebläse 13, 14 zur Aufrechterhaltung eines Umluftstromes ausgestattet. Jedes Gebläse 13, 14 hat einen frequenzgesteuerten Antrieb 15, 16 und ist daher mit veränderlicher Drehzahl antreibbar. In jeder Zone ist eine Heizvorrichtung 17, 18, z. B. ein Brenner, angeordnet. Dem Schwebetrockner 9 nachgeschaltet ist ein Kühlwalzenpaar 19. Von dort gelangt die getrocknete Papierbahn z. B. zu einem nicht dargestellten Querschneider oder zu einem Wickler.

Das Lieferwerk, in dem die Rolle 2 gelagert ist, und die verschiedenen Walzen, über die die Papierbahn 1 geführt wird, insbesondere die Umlenkwalzen 5, die Quetschwalzen 6, 7 und die Kühlwalzen 19 sind mit regelbaren Antrieben versehen, die mit aufeinander abgestimmten Drehzahlen antreibbar sind. Sie bilden gemeinsam eine Fördereinrichtung, auf der die Papierbahn 1 mit geringer Spannung und einstellbarer Geschwindigkeit fortbewegt wird.

In der Anlage sind insgesamt drei Geräte 20, 21, 22 zur Messung des Flächengewichtes installiert, das erste zwischen Rolle 2 und Imprägnierwerk 3, das zweite zwischen Imprägnierwerk 3 und Schwebetrockner 9, das dritte unmittelbar hinter dem Schwebetrockner 9. Die Geräte arbeiten nach dem Prinzip, daß die Absorption einer radioaktiven Strahlung als Maß für das Flächengewicht gemessen wird. Dem Gerät 22 benachbart ist ein auf Mikrowellen-Basis arbeitendes Feuchtemeßgerät 23 zur Messung der Restfeuchte der den Schwebetrockner 9 verfassenden getrockneten Papierbahn angeordnet. Die Einlaufzone 11 ist mit einem Infrarot-Sensor 24 zur Messung der Temperatur der Papierbahn 1 ausgestattet, ebenso etwaige in der Zeichnung nicht dargestellte Zwischenzonen.

Im Betrieb wird mit dem Gerät 21 kontinuierlich oder in kurzen Zeitabständen das Flächengewicht der nassen, d. h. frisch mit wässriger Harzlösung von etwa 30 bis 60 % Harzgehalt getränkten Papierbahn 1 gemessen. Es entspricht in der Regel dem 2- bis 5-fachen Flächengewicht des Rohpapiers. Ein entsprechendes Meßsignal wird einem Regler 25 zugeführt und dort mit einer Führungsgröße verglichen. Entsprechend der festgestellten Differenz bildet der Regler 25 ein Stellsignal für den Stellantrieb der Quetschwalze 6. Dadurch wird der Walzenspalt in dem Sinne verändert, daß das Flächengewicht der Führungsgröße angepasst wird.

Die Führungsgröße wird dem Regler 25 durch einen Prozeßrechner 26 vorgegeben. Dieser verarbeitet Meßsignale der Geräte 20 und 22 sowie des Feuchtemeßgerätes 23. Mit dem Gerät 20 wird das Flächengewicht der trockenen, unbehandelten Papierbahn 1 gemessen, mit dem Gerät 22 das Flächengewicht der imprägnierten und getrockneten Papierbahn. Dieses summiert sich aus dem Flächengewicht des Rohpapiers, der pro Flächeneinheit aufgetragenen Harzmenge und der mit dem Feuchtemeßgerät 23 erfassten Restfeuchte. Das Flächengewicht der getrockneten, imprägnierten Papierbahn liegt in der Regel zwischen dem 1,5- und dem 3-fachen Flächengewicht des Rohpapiers. Die Restfeuchte liegt zwischen 5 und 8 %, z. B. bei 6,5 % ± 0,1 %.

Aus den Meßsignalen ermittelt der Prozeßrechner 26 die aufgetragene Harzmenge (ohne Restfeuchte). Er vergleicht sie mit einem vorgegebenen Sollwert und beeinflußt im Falle einer Abweichung die Führungsgröße des Reglers 25 mit entgegengesetzten Vorzeichen, so daß die Abweichung verkleinert wird. Ein Regler 27 vergleicht die gemessene Restfeuchte mit einem vorgegebenen Sollwert und gibt entsprechend der festgestellten Abweichung ein Stellsignal an den Antriebsmotor des Gebläses 14 der Auslaufzone 12.

In der Einlaufzone 11 wird ein der Bahntemperatur entsprechendes Signal des Infrarot-Sensors 24 einem Regler 28 zugeführt. Er vergleicht die Bahntemperatur mit einer empirisch ermittelten Solltemperatur, die auf Versuchen beruht, mit denen man den optimalen Trocknungsverlauf ermittelt hat. Bei einer Abweichung veranlasst der Regler 28 durch ein Korrektursignal den Antrieb des Gebläses 15 zu einer entsprechenden Veränderung der Drehzahl. Mit entsprechenden Regelkreisen sind auch etwaige Zwischenzonen ausgerüstet. Bei einem aus insgesamt vier Zonen bestehenden Schwebetrockner liegt beispielsweise die optimale Bahntemperatur für die Einlaufzone 11 bei 70°C bis 80°C, für die beiden daran anschließenden Zwischenzonen bei etwa 100°C bzw. 110°C. Bei Einhaltung der optimalen Temperaturen in der Einlaufzone 11 und den Zwischenzonen wird sichergestellt, daß an dem Feuchtemeßgerät 23 nur noch geringe Abweichungen von der vorgeschriebenen Restfeuchte vorkommen können. Daher kann sich der korrigierende Eingriff des Reglers 27 auf die Auslaufzone 12 beschränken.

Abweichend von dem dargestellten Ausführungsbeispiel ist es auch möglich, zur Regelung der Temperatur der Papierbahn 1 anstelle der Änderung der Drehzahl der Umluftgebläse 13, 14 - u. U. auch zusätzlich - eine Änderung der Wärmezufuhr zu den Heizvorrichtungen 17 der Einlaufzone und ggf. der Zwischenzonen vorzunehmen. Weiterhin ist es möglich, die Restfeuchte bei unveränderter Drehzahl des Gebläses 14 der Auslaufzone 12 durch Änderung der Durchlaufgeschwindigkeit zu regeln, mit der die Papierbahn 1 den Schwebetrockner 9 durchläuft. In diesem Falle erzeugt der Regler 27 ein Stellsignal für die Antriebe der verschiedenen Walzen 5, 6, 7, 19..., über die die Papierbahn geführt wird. Es ist auch möglich, die Restfeuchte durch Änderung der Wärmezufuhr zu der Heizvorrichtung 18 der Auslaufzone 12 zu regeln. Wenn das zu imprägnierende Papier sehr gleichmäßig ist, kann das zwischen Rolle 2 und Imprägnierwerk 3 angeordnete Gerät 20 entfallen. Stattdessen wird in den Prozeßrechner 26 das Flächengewicht direkt eingegeben.

Bei einer Variante der Erfindung sind die Geräte 21, 22 zur Messung des Flächengewichtes der nassen bzw. getrockneten Papierbahn 1 auf Schienen angeordnet, die sich in Querrichtung erstrecken. Sie sind mittels eines Antriebs hin und her fahrbar. Sie messen das Flächengewicht abwechselnd in der Nähe der beiden Kanten und ggf. noch an weiteren Stellen. Dementsprechend ist die Dosiereinrichtung über der Breite ungleichmäßig einstellbar. Im einfachsten Falle sind die seitlichen Lager der Quetschwalze 6 unabhängig voneinander verstellbar, so daß sich bei unterschiedlicher Einstellung der beiden Lager ein keilförmiger Spalt ergibt. Sollte sich im Betrieb zeigen, daß an der einen Seite mehr Harzlösung aufgetragen wird als an der anderen Seite, so läßt sich der Fehler durch einseitige Verstellung der Quetschwalze 6 zumindest annähemd korrigieren. Eine noch feinere Kompensation von Ungleichmäßigkeiten ist möglich, wenn die Quetschwalze 6 als Walze mit steuerbarer Durchbiegung ausgebildet ist

## Patentansprüche

1. Verfahren zum Imprägnieren und Trocknen einer durchlaufenden saugfähigen Papierbahn mit einem in Wasser gelösten Kunstharz, wie Hamstoffharz oder Melaminharz,
mit den folgenden Merkmalen:
a) auf eine durchlaufende Bahn wird das in Wasser gelöste Kunstharz in dosierter Menge aufgetragen;
b) die Bahn wird durch erwärmte, im Kreislauf umgewälzte Luft schwebend geführt und auf eine vorgegebene Restfeuchte getrocknet;
c) das Flächengewicht der frisch imprägnierten, nassen Bahn wird gemessen und durch geregelte Dosierung der Harzmenge an eine vorgegebene Führungsgröße angeglichen;
d) die Restfeuchte der getrockneten Bahn wird gemessen und auf einen Sollwert eingeregelt, in dem mindestens eine der folgenden Größen beeinflußt wird:
d1) die Luftgeschwindigkeit zumindest in einem letzten Abschnitt der Trocknung;
d2) die Lufttemperatur zumindest in einem letzten Abschnitt der Trocknung;
d3) die Durchlaufgeschwindigkeit der Bahn;
e) aus dem Flächengewicht und der Restfeuchte der getrockneten Bahn und dem Flächengewicht der unbehandelten Bahn wird die aufgetragene Harzmenge berechnet, und durch Vergleich mit einem Sollwert wird die Führungsgröße für die Dosierung ermittelt.

2. Verfahren nach Anspruch 1, **dadurch gekennzeichnet, daß** das Flächengewicht der unbehandelten Bahn kontinuierlich oder in kurzen Zeitabständen ermittelt und zur Berechnung der aufgetragenen Harzmenge verwendet wird.

3. Verfahren nach Anspruch 1 oder 2, **dadurch gekennzeichnet, daß** die Bahn zunächst mindestens einen Trocknungsabschnitt durchläuft, in dem ihre Temperatur gemessen und auf einen Sollwert eingeregelt wird, in dem mindestens eine der beiden folgenden Größen verändert wird:
a) Geschwindigkeit der umgewälzten Luft
b) Temperatur der umgewälzten Luft.

4. Anlage zum Imprägnieren und Trocknen einer durchlaufenden saugfähigen Papierbahn mit einem in Wasser gelösten Kunstharz, wie Harnstoffharz oder Melaminharz, zur Durchführung des Verfahrens gemäß einem der Ansprüche 1 bis 3,
mit einem Imprägnierwerk (3), welches eine verstellbare Dosiereinheit (6, 7) aufweist;
mit einem Schwebetrockner (9), der mit Düsen (10) zum Aufblasen von Heißluft, mit Gebläsen (13, 14) zum Umwälzen der Heißluft und mit Heizvorrichtungen (17, 18) ausgestattet ist,
mit einer Fördervorrichtung zum Transportieren der Bahn (1) durch das Imprägnierwerk (3) und den Schwebetrockner (9)
und mit einem Regelsystem, welches zumindest die folgenden Komponenten aufweist:
einen ersten Regelkreis, der ein zwischen Imprägnierwerk (3) und Schwebetrockner (9) angeordnetes Gerät (21) zur Messung des Flächengewichtes der nassen Bahn (1) und einen ersten Regler (25) umfasst, der durch Einwirkung auf die Dosiereinheit (6, 7) das Flächengewicht an eine vorgegebene Führungsgröße angleicht;
einen zweiten Regelkreis, der ein am Auslauf des Schwebetrockners angeordnetes Feuchtemeßgerät (23) und einen Regler (27) umfasst, der die Restfeuchte einem Sollwert angleicht, indem er mindestens einen der folgenden Parameter beeinflußt:
a) Drehzahl des Gebläses (14) in der Auslaufzone (12) des Schwebetrockners (9);
b) Wärmezufuhr durch die Heizeinrichtung (18) der Auslaufzone (12) des Schwebetrockners (9);
c) Geschwindigkeit der Fördereinrichtung (5, 6, 7, 19, ...);
einen Prozeßrechner (26), der aus dem mit dem Gerät (22) gemessenen Flächengewicht der getrockneten Bahn (1), der Restfeuchte und dem Flächengewicht der unbehandelten Bahn die aufgetragene Harzmenge berechnet und mit einem Sollwert vergleicht und entsprechend der ermittelten Abweichung die Führungsgröße für den Regler (25) der Dosiereinheit (6, 7) vorgibt.

5. Anlage nach Anspruch 4, **gekennzeichnet durch** ein weiteres, dem Imprägnierwerk (3) vorgeschaltetes, mit dem Prozeßrechner (26) verbundenes Gerät (20) zur Messung des Flächengewichtes der unbehandelten Bahn (1).

6. Anlage nach Anspruch 4 oder 5, **dadurch gekennzeichnet, daß** der Auslaufzone (12) des Schwebetrockners (9) mindestens eine Zone (11) vorgeschaltet ist, die mit einem Meßinstrument (24) für die Temperatur der durchlaufenden Bahn und mit einem Regler (28) ausgerüstet ist, welcher die Temperatur auf einen Sollwert einregelt, indem er mindestens einen der beiden folgenden Parameter beeinflußt:
a) Drehzahl des Gebläses (13);
b) Wärmezufuhr zu der Heizvorrichtung (17).

7. Anlage nach einem der Ansprüche 4 bis 6, **dadurch gekennzeichnet, daß** die Geräte (20, 21, 22) traversierbar angeordnet sind.

8. Anlage nach Anspruch 7, **dadurch gekennzeichnet, daß** die Dosiereinheit (6, 7) über der Breite ungleichmäßig einstellbar ist.

## Claims

1. A method of impregnating and drying a continuous web of absorbent paper with a synthetic resin dissolved in water, such as urea resin or melamine resin,
with the following features:
a) the synthetic resin dissolved in water is applied to a continuous web in a dose-metered quantity;
b) the web is passed in suspension through warmed circulating air and dried to a previously stipulated residual moisture;
c) the basis weight of the freshly impregnated, wet web is measured and, by controlled dose-metering of the resin quantity, matched to a predetermined reference variable;
d) the residual moisture of the dried web is measured and adjusted to a reference value, by influencing at least one of the following variables:
d1) the air speed at least in a last stage of drying;
d2) the air temperature at least in a last stage of drying;
d3) the throughput speed of the web;
e) the applied resin quantity is calculated from the basis weight and residual moisture of the dried web and the basis weight of the untreated web, and the reference variable for the dose-metering is determined by comparison with a reference value.

2. A method according to Claim 1, **characterised in that** the basis weight of the untreated web is determined continuously or in short time intervals, and used to calculate the quantity of resin applied.

3. A method according to Claim 1 or 2, **characterised in that** the web first of all passes through at least one drying stage in which its temperature is measured and adjusted to a reference value, by altering at least one of the following two parameters:
a) speed of the circulated air
b) temperature of the circulated air.

4. An installation for impregnating and drying a continuous web of absorbent paper with a synthetic resin dissolved in water, such as urea resin or melamine resin, for performing the method according to one of Claims 1 to 3,
with an impregnating mechanism (3) which has an adjustable dose-metering unit (6, 7);
with a suspension drier (9), equipped with nozzles (10) for blowing hot air upwards, fans (13, 14) for circulating the hot air, and heating devices (17, 18),
with a conveying device for transporting the web (1) through the impregnating mechanism (3) and suspension drier (9)
and with a control system which has at least the following components:
a first control circuit, comprising an instrument (21) arranged between the impregnating mechanism (3) and suspension drier (9) for measuring the basis weight of the wet web (1), and a first controller (25), which matches the basis weight to a predetermined reference variable;
a second control circuit, comprising a moisture-measuring instrument (23) at the outlet of the suspension drier, and a controller (27) which matches the residual moisture to a reference value by influencing at least one of the following parameters:
a) speed of the fan (14) in the outlet zone (12) of the suspension drier (9);
b) supply of heat through the heating device (18) of the outlet zone (12) of the suspension drier (9);
c) speed of the conveying device (5, 6, 7, 19, ...);
a process computer (26), which calculates the applied resin quantity from the basis weight of the dried web (1) measured with the instrument (22), the residual moisture and basis weight of the untreated web, compares the said quantity with a reference value and, in accordance with the determined deviation, outputs the reference variable for the controller (25) of the dose-metering unit (6, 7).

5. An installation according to Claim 4, **characterised by** another instrument (20), connected upstream of the impregnating mechanism (3) and linked to the process computer (26), for measuring the substance weight of the untreated web (1).

6. An installation according to Claim 4 or 5, **characterised in that** at least one zone (11) is connected upstream of the outlet zone (12) of the suspension drier (9), the said zone being equipped with an instrument (24) for measuring the temperature of the continuous web and with a computer (28), which adjusts the temperature to a reference value by influencing at least one of the following two parameters:
a) speed of the fan (13);
b) supply of heat to the heating device (17).

7. An installation according to one of Claims 4 to 6, **characterised in that** the instruments (20, 21, 22) are arranged traversibly.

8. An installation according to Claim 7, **characterised in that** the dose-metering unit (6, 7) is unevenly adjustable over its width.

## Revendications

1. Procédé d'imprégnation et de séchage d'une bande continue absorbante de papier avec une résine synthétique dissoute dans de l'eau, telle que de la résine aminoplaste ou de la résine de mélamine, avec les caractéristiques suivantes :
a) la résine synthétique dissoute dans de l'eau est appliquée en une quantité dosée sur une bande continue ;
b) la bande est guidée en suspension par de l'air réchauffé se déplaçant en mouvement circulaire et est séchée jusqu'à atteindre une humidité résiduelle prédéterminée ;
c) le grammage de la bande fraîchement imprégnée et mouillée est mesuré et est ajusté à une valeur de référence par un dosage régulé de la quantité de résine ;
d) l'humidité résiduelle de la bande séchée est mesurée et est réglée à une valeur de consigne, et ceci en exerçant une influence sur au moins sur l'un des paramètres suivants :
d1) la vitesse de l'air, au moins dans une dernière section du séchage ;
d2) la température de l'air, au moins dans une dernière section du séchage ;
d3) la vitesse de passage de la bande ;
e) la quantité de résine appliquée est calculée à partir du grammage et de l'humidité résiduelle de la bande séchée ainsi que du grammage de la bande non traitée et la valeur de référence pour le dosage est déterminée par comparaison avec une valeur de consigne.

2. Procédé selon la revendication 1, **caractérisé en ce que** le grammage de la bande non traitée est déterminé en continu ou avec des intervalles courts et est utilisé pour le calcul de la quantité de résine appliquée.

3. Procédé selon la revendication 1 ou 2, **caractérisé en ce que** la bande traverse d'abord au moins une section de séchage, dans laquelle sa température est mesurée et est réglée à une valeur de consigne et dans laquelle au moins l'un des deux paramètres suivants est modifié :
a) la vitesse de l'air mis en circulation ;
b) la température de l'air mis en circulation.

4. Installation d'imprégnation et de séchage d'une bande continue absorbante de papier avec une résine synthétique dissoute dans de l'eau, telle que de la résine aminoplaste ou de la résine de mélamine, pour mettre en oeuvre le procédé selon l'une des revendications 1 à 3,
avec un mécanisme d'imprégnation (3) comprenant une unité de dosage réglable (6, 7);
avec un sécheur pour le guidage flottant (9), qui est muni de buses (10) pour le soufflage de l'air chaud, de souffleries (13, 14) pour la mise en circulation de l'air chaud et de dispositifs de chauffage (17, 18) ;
avec un dispositif de convoyage pour le transport de la bande (1) à travers le mécanisme d'imprégnation (3) et le sécheur à colonne d'air chaud (9)
et avec un système de régulation englobant au moins les composants suivants :
un premier circuit de régulation, qui comprend un instrument de mesure (21) disposé entre le mécanisme d'imprégnation (3) et le sécheur pour le guidage flottant (9) pour la mesure du grammage de la bande mouillée (1) et un premier régulateur (25), qui ajuste le grammage à une valeur de référence prédéterminée par une action sur l'unité de dosage (6, 7);
un deuxième circuit de régulation, qui comprend un instrument de mesure de l'humidité (23) disposé à la sortie du sécheur pour guidage flottant et un régulateur (27), qui ajuste l'humidité résiduelle à une valeur de consigne en exerçant une influence sur au moins l'un les paramètres suivants :
a) la vitesse de rotation de la soufflerie (14) dans la zone de sortie (12) du sécheur pour le guidage flottant (9);
b) l'apport de chaleur par le dispositif de chauffage (18) de la zone de sortie (12) du sécheur à pour le guidage flottant;
c) la vitesse du dispositif de convoyage (5, 6, 7, 19...) ;
et un calculateur d'asservissement (26) qui, sur la base du grammage de la bande séchée (1) mesuré avec l'instrument de mesure (22), de l'humidité résiduelle et du grammage de la bande non traitée, calcule la quantité de résine appliquée et la compare avec une valeur de consigne puis, selon la déviation constatée, impose la valeur de référence pour le régulateur (25) de l'unité de dosage (6, 7).

5. Installation selon la revendication 4, **caractérisée en ce qu'**un autre instrument de mesure (20), placé en amont du mécanisme d'imprégnation (3), relié au calculateur d'asservissement (26) et servant à mesurer le grammage de la bande non traitée (1), est prévu.

6. Installation selon la revendication 4 ou 5, **caractérisée en ce que** la zone de sortie (12) du sécheur pour le guidage flottlant (9) est précédée d'au moins une zone (11), qui est équipée d'un instrument de mesure (24) pour la mesure de la température de la bande lors de son passage et d'un régulateur (28), qui régule la température à une valeur de consigne en exerçant une influence sur au moins l'un des deux paramètres suivants :
a) le régime de rotation de la soufflerie (13)
b) l'apport de chaleur au dispositif de chauffage (17).

7. Installation selon l'une des revendications 4 à 6, **caractérisée en ce que** les instruments de mesure (20, 21, 22) sont disposés de manière mobile en direction transversale.

8. Installation selon la revendication 7, **caractérisée en ce que** l'unité de dosage (6, 7) peut être réglée de manière inégale dans le sens de sa largeur.
